# EUROPÄISCHE PATENTSCHRIFT

(11) **EP 2 427 751 B1**
(45) Veröffentlichungstag und Bekanntmachung des Hinweises auf die Patenterteilung: **22.07.2015**
(21) Anmeldenummer: 10716492.3
(22) Anmeldetag: 27.04.2010
(51) Int. Cl.: G01N 21/05, G01N 21/53, G01N 21/17

(54) **MODULARES OPTISCHES SENSORSYSTEM FÜR FLUIDE MEDIEN**
MODULAR OPTICAL SENSOR SYSTEM FOR FLUID MEDIA
SYSTÈME DÉTECTEUR OPTIQUE MODULAIRE POUR DES MILIEUX FLUIDES

(30) Priorität: 04.05.2009 DE 202009006488 U
(43) Veröffentlichungstag der Anmeldung: 14.03.2012
(73) Patentinhaber: Bürkert Werke GmbH, 74653 Ingelfingen (DE)
(72) Erfinder: MOLL, Georg, 97922 Lauda (DE); RABUS, Dominik, 74670 Forchtenber (DE); WINKLER, Michael, 74679 Weissbach (DE)
(74) Vertreter: Prinz & Partner mbB
(86) Internationale Anmeldenummer: PCT/EP2010/002587
(87) Internationale Veröffentlichungsnummer: WO 2010/127790

(56) Entgegenhaltungen:
- DE-U1-202008 009 938
- US-A1- 2007 225 612
- US-B1- 6 369 894

## Beschreibung

Die Erfindung betrifft ein modulares optisches Sensorsystem für fluide Medien. Optische Analyseverfahren an fluiden Medien werden im Labor mit speziellen Messapparaturen ausgeführt. Typische optische Messungen erfassen die Trübung, Farbe oder Absorption einer Flüssigkeit. Für jedes optische Messverfahren benötigt man im Labor einen eigenen Messaufbau. Für den Einsatz vor Ort, insbesondere auch zur Überwachung optischer Eigenschaften an strömenden Medien, sind die bekannten Messverfahren ungeeignet.

Aus der US2007/0225612 A ist ein modulares optisches Sensorsystem für fluide Medien bekannt, das ein Anschlussmodul und ein Messmodul mit einer austauschbaren Fluidkammer und einem austauschbaren Optikhalter aufweist.

Aus der US 6,369,894 ist ein modulares optisches Sensorsystem für fluide Medien bekannt, das ein Anschlussmodul und ein Messmodul mit einer austauschbaren Fluidkammer und einem austauschbaren Optikhalter aufweist. In der Fluidkammer ist ein Messraum gebildet.

Das erfindungsgemäße modulare optische Sensorsystem für fluide Medien gemäß Anspruch 1 zeichnet sich aus durch große Flexibilität und ein breites Applikationsspektrum. Mittels eines Optikhalters, welcher zwei optische Achsen aufweist, können parallel mehrere Messungen in einem Messaufbau durchgeführt werden. Beispielsweise kann im Durchlichtverfahren die Absorption eines Mediums bei zwei unterschiedlichen Wellenlängen bestimmt werden Die beiden Messstrecken sind in einem 90° Winkel zueinander angeordnet.

Es ist aber auch möglich eine Absorption zu messen und parallel dazu im 90° Winkel das Streulicht zu erfassen, was für eine Trübungsmessung relevant ist.

Durch die Austauschbarkeit des Optikhalters können mit demselben Messaufbau hintereinander verschiedenartige optische Messungen durchgeführt werden. Die Verwendung optischer Bauelemente wie Leuchtdioden (LEDs), Fotodioden, Laserdioden und dergleichen führt zu einem sehr kompakten Aufbau. Durch die Austauschbarkeit der Fluidkammer kann sowohl im kontinuierlichen Durchfluss als auch mit einzelnen Proben gemessen werden. Ferner können abgeschlossene Fluidkammern mit einer Referenzprobe für Eichzwecke eingesetzt werden. Die Innenflächen der Fluidkammer können mit optischen Elementen wie Linsen oder Gitter ausgestattet werden. Aber auch fluidische Bauelemente können in die Fluidkammer integriert werden, beispielsweise Entlüftungselemente, Filter, Rückschlagventile. Durch die Austauschbarkeit der wesentlichen Funktionsteile des Systems lässt sich nach längerer Einsatzdauer immer wieder ein definierter Anfangszustand herstellen.

Gegenstand der Erfindung ist auch ein optisches Messmodul zur Verwendung in einem modularen Sensorsystem, wie in Anspruch 13 angegeben. Hier wird die große Anwendungsflexibilität durch die Austauschbarkeit des Messmoduls insgesamt, aber auch durch die Austauschbarkeit des fluidischen Einsatzes erreicht.

Weitere Merkmale und Vorteile der Erfindung ergeben sich aus der folgenden Beschreibung mehrerer Ausführungsformen unter Bezugnahme auf die beigefügten Zeichnungen. In den Zeichnungen zeigen:
- Figur 1 eine perspektivische Explosionsansicht eines modularen optischen Sensorsystems nach einer ersten Ausführungsform;
- Figur 2 eine vergrößerte Perspektivansicht eines Optikhalters;
- Figur 3 eine vergrößerte Perspektivansicht einer Fluidkammer;
- Figur 4 die Fluidkammer von Figur 3 in Explosionsansicht;
- Figur 5 eine Perspektivansicht eines optischen Messmoduls zur Verwendung in einem modularen Sensorsystem;
- Figur 6 eine Perspektivansicht eines Einsatzes für das Messmodul von Figur 5; und
- Figur 7 eine Weiterbildung des in Fig. 2 gezeigten Optikhalters.

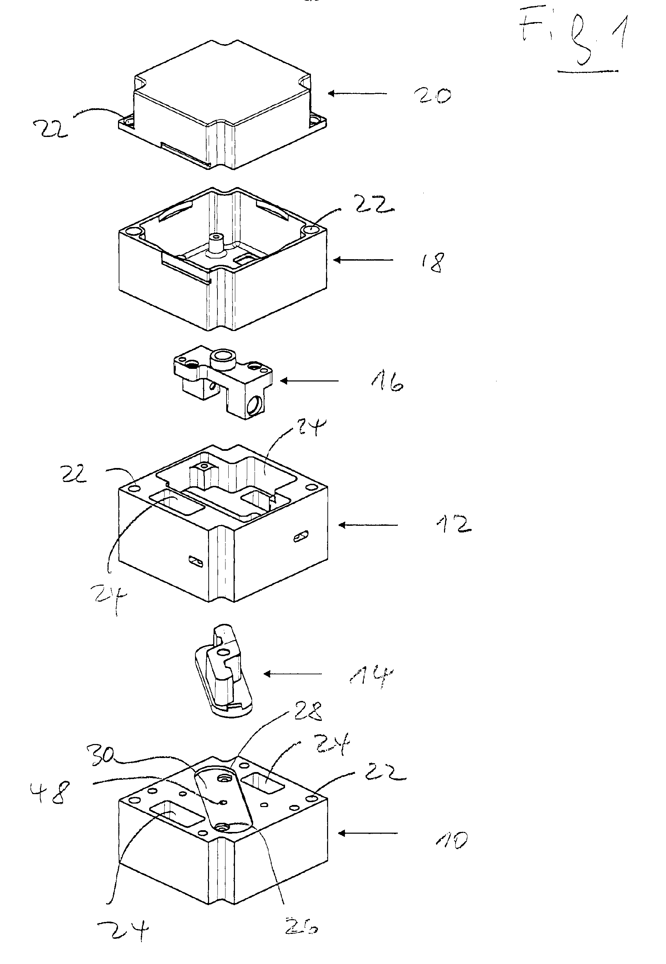

Das in Figur 1 gezeigte modulare optische Sensorsystem besteht aus einer Reihe von aufeinandergestapelten quaderförmigen Modulen. Die zusammengesetzten Module ergeben insgesamt ein Gerät, das annähernd würfelförmig ist.

Die Basis bildet ein Fluidik/Elektronik-Anschlussmodul 10. Auf dieses wird ein optisches Messmodul 12 aufgesetzt. Das optische Messmodul 12 nimmt eine austauschbare Fluidkammer 14 sowie einen austauschbaren Optikhalter 16 auf. Auf das Messmodul 12 ist ein Elektronikmodul 18 aufgesetzt. Das Elektronikmodul 18 wird durch einen aufgesetzten Deckel 20 abgeschlossen.

Alle Module sind mit Durchgangsöffnungen 22 versehen, die der Einführung von Befestigungsmitteln dienen (nicht dargestellt). Die Module 10, 12 sind ferner mit ausgesparten Durchführungen 24 versehen, die miteinander fluchten und in das Modul 18 münden. Das Modul 10 hat ferner einen Fluideinlass 26 und einen Fluidauslass 28. Beide münden in einer flachen Ausnehmung 30, die in der dem Modul 12 gegenüberliegenden Oberfläche gebildet ist und die Schnittstelle für die Fluidkammer 14 bildet.

Der Optikhalter 16 besteht aus einem Trägersteg 32 und zwei von dessen Enden im Abstand voneinander abragenden parallelen Armen 34, 36. An dem Trägersteg 32 wie auch an den Armen 34, 36 sind Montageöffnungen 38 für optische Bauelemente angebracht. Bei diesen kann es sich um Leuchtdioden (LEDs), Fotodioden oder auch Laserdioden handeln. Es können aber auch andere optische Bauelemente wie Spiegel, optische Gitter, Prismen und dergleichen an dem Optikhalter 16 angebracht werden.

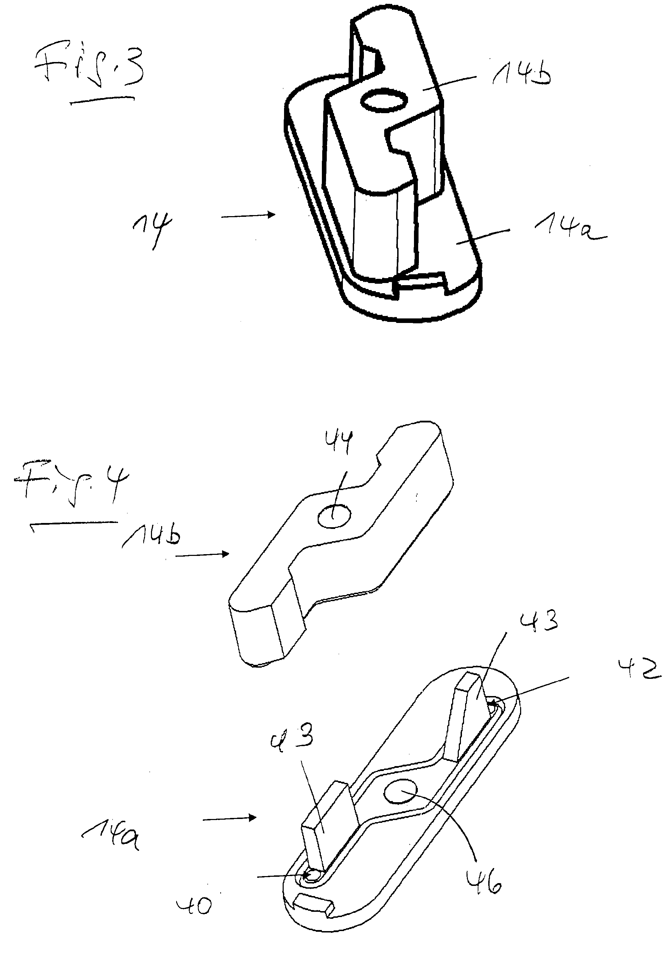

Der Optikhalter 16 umgreift mit Trägersteg 32 sowie Armen 34, 36 die Fluidkammer 14, die nun unter Bezugnahme auf die Figuren 3 und 4 näher beschrieben wird.

Die Fluidkammer 14 besteht aus einem Anschlussflansch 14a und einem Gehäuseteil 14b, das auf einer Seite offen und durch den Anschlussflansch 14a verschließbar ist. Der Rand des Gehäuseteils 14b ist dicht in eine Nut des Anschlussflansches 14a eingesetzt. Der Anschlussflansch 14a kann passend und abgedichtet in die Ausnehmung 30 des Moduls 10 eingesetzt werden und hat Öffnungen 40, 42, die mit den entsprechenden Öffnungen 26, 28 des Moduls 10 fluchten. An dem Anschlussflansch 14a sind zwei Verdrängerkörper 43 angebracht, die in das Volumen der Fluidkammer hineinragen.

Die Verdrängerkörper 43 sollen unerwünscht auftretende Luftblasenbildung verhindern. Bei Messungen im Durchflussverfahren werden Luftblasen durch die Verdrängerkörper 43 zerkleinert und durch die Strömungsverhältnisse schnell weiter transportiert.

Das Gehäuseteil 14b bildet in seinem mittleren Bereich einen Messraum für das zugeführte fluide Medium. Dieser Messraum ist vorzugsweise würfelförmig und zeichnet sich dadurch aus, dass dieser von zwei gleichlangen zueinander senkrecht stehenden Messstrecken gequert wird, die jeweils zwischen gegenüberliegenden Seitenflächenmittelpunkten verlaufen. Der Optikhalter 16 wird der Fluidkammer 14 in solcher Weise übergestülpt, dass die Arme 34, 36 und der Trägersteg 32 drei ineinander übergehende Seiten des Messraums umschließen. An dem Optikhalter 16 ist durch zwei einander gegenüberliegende, in den Montageöffnungen 38 angebrachte optische Bauelemente eine optische Achse A gebildet, die den Messraum für das fluide Medium in der Fluidkammer 14 quert. Eine zweite optische Achse B, die senkrecht zur Achse A ist und diese schneidet, ist durch ein weiteres optisches Bauelement am Optikhalter 16 definiert. Die optische Achse B durchquert zwei einander gegenüberliegende Fenster 44, 46 im Gehäuseteil 14b bzw. Anschlussflansch 14a. Dem Fenster 46 gegenüberliegend kann in der Ausnehmung 30 des Moduls 10 ein optisches Bauelement 48 angeordnet sein, beispielsweise eine LED, Fotodiode oder auch ein Spiegel.

Die beiden Seitenflächen der Fluidkammer 14, die zwischen den Tägerarmen 34 und 36 des Optikhalters 16 liegen und benachbart zu zwei gegenüberliegenden Montageöffnungen 38 sind, sind ebenfalls Fenster ähnlich ausgebildet, so dass diese für optische Messungen geeignet sind.

Wie sich der Figur 1 entnehmen lässt, erstreckt sich der Optikhalter 16 in einer Ausnehmung des Messmoduls 12 in etwa parallel zu dessen Wänden, während die Fluidkammer 14 schräg dazu, also in etwa diagonal bezüglich der Quaderform des Moduls 12, eingesetzt wird. Die Module 10, 12, 18, 20 werden in dieser Reihenfolge aufeinandergestapelt und lösbar, aber fest verbunden, beispielsweise mittels Zugankern oder Spannschrauben, die durch die Öffnungen 22 geführt werden.

Im Gebrauch des Sensorsystems wird dieses mit den für die jeweilige Anwendung benötigten Ausführungen der Fluidkammer 14 und des Optikhalters 16 bestückt. Vor Beginn der eigentlichen Messungen kann es zweckmäßig sein, eine Eichung des Systems vorzunehmen, indem vorübergehend eine Fluidkammer eingesetzt wird, in der eine Referenzprobe fest eingeschlossen ist. Die Messungen können dann kontinuierlich oder probenweise erfolgen, indem der Fluidkammer 14 über Fluideinlass 26 das zu messende Fluid zugeführt wird, welches dann über den Fluidauslass 28 austritt. Je nach Art der verwendeten optischen Bauelemente, mit denen der Optikhalter 16 bestückt ist, können Messungen der Trübung, Farbe, Absorption usw. im Durchlicht durchgeführt werden. Es ist auch möglich mittels eines einzigen Messaufbaus, eine Messung im Durchlicht und eine Streulichtmessung dazu parallel im 90° Winkel durchzuführen. Die Messsignale werden mit einer Auswerteelektronik verarbeitet, die in dem Elektronikmodul 18 untergebracht ist.

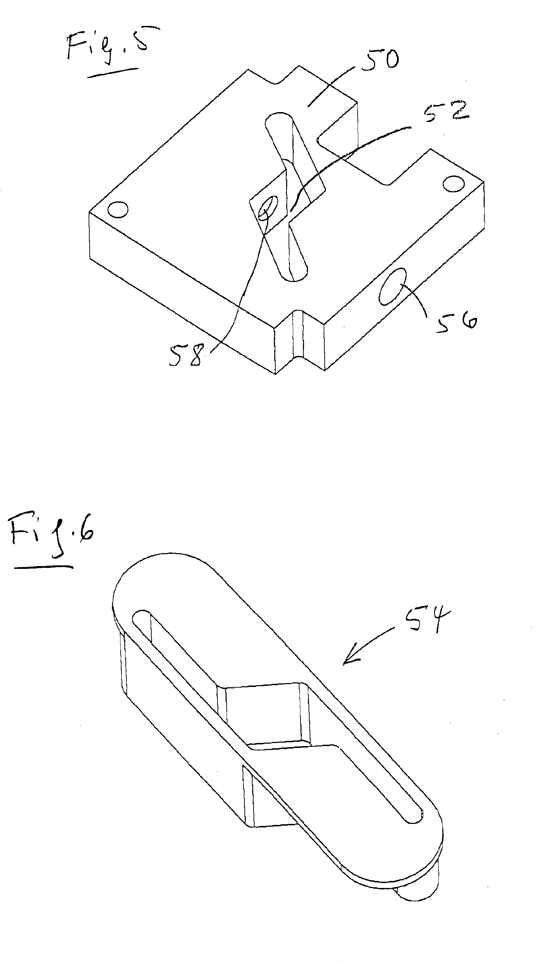

Die in den Figuren 5 und 6 gezeigte Ausführung eines optischen Messmoduls kann anstelle des Messmoduls 12 mit Fluidkammer 14 und Optikhalter 16 verwendet werden. Figur 5 zeigt einen quaderförmigen Trägerkörper 50, der mit weiteren quaderförmigen oder plattenförmigen Modulen in ähnlicher Weise wie in Figur 1 gezeigt zusammengesetzt werden kann. Der Trägerkörper 50 weist eine allgemein diagonal orientierte Ausnehmung 52 auf, in die der in Figur 6 gezeigte Einsatz 54 passgenau eingesetzt werden kann. Der Einsatz 54 bildet eine Fluidkammer, in ähnlicher Weise wie die Fluidkammer 14 der zuvor beschriebenen Ausführungsform. Der quaderförmige Trägerkörper 50 ist mit einander gegenüberliegenden Montageöffnungen 56, 58 für optische Bauelemente versehen. Die durch diese Montageöffnungen definierte optische Achse quert den mittleren Teil des Einsatzes 54 und somit das darin eingeschlossene oder strömende fluide Medium, in ähnlicher Weise wie bei der zuvor beschriebenen Ausführungsform.

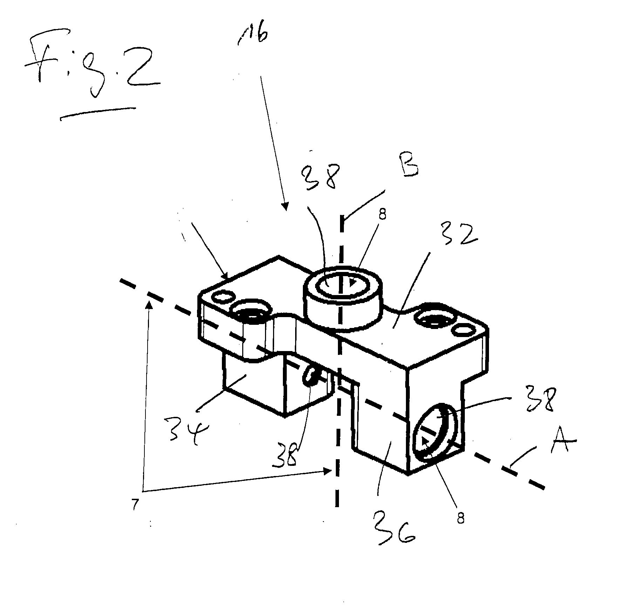

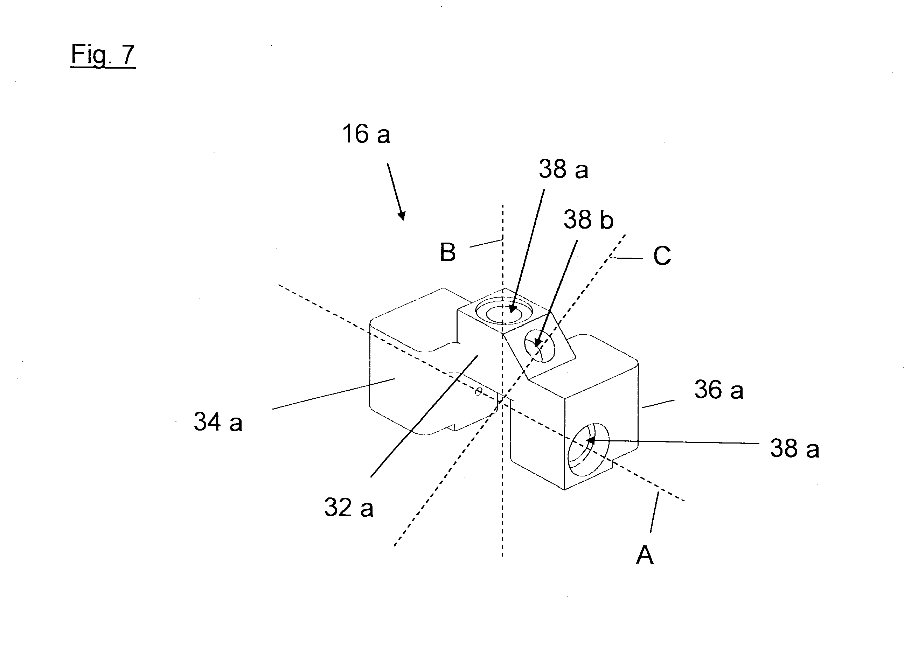

Die in Fig. 7 gezeigte Ausführungsform des Optikhalters 16a besteht aus einem mittleren Trägersteg 32a und zwei von dessen Enden im Abstand voneinander abragenden parallelen Armen 34a, 36a. An dem Trägersteg 32a wie auch an den Armen 34a, 36a sind Montageöffnungen 38a für optische Bauelemente angebracht. Bei diesen kann es sich um Leuchtdioden (LEDs), Fotodioden, Phototransistoren oder auch Laserdioden handeln. Es können aber auch andere optische Bauelemente wie Spiegel, optische Gitter, Prismen und dergleichen an dem Optikhalter 16a angebracht werden. Die Montageöffnungen 38a für die optischen Elemente sind zunächst ähnlich wie in Fig. 2 so angeordnet, dass zwei optische Achsen A und B definiert sind, die sich schneiden können. Zusätzlich ist an dem Trägersteg 32a eine weitere Montageöffnung 38b vorgesehen, durch die eine dritte optische Achse C ermöglicht wird, welche unter 45° gegen die Achsen A und B geneigt ist und beide Achsen schneiden kann. Wird in diese Montageöffnung 38b eine Lichtquelle eingesetzt, so kann mit einem Lichtempfänger, der in eine Montageöffnung des Trägersteges 32a eingesetzt ist, Streulicht gemessen werden, das von einem in der Fluidkammer 14 (Fig. 3) enthaltenen opaken oder dispersiven Medium emittiert wird. Zur Erfassung von reflektiertem Licht kann eine weitere Montageöffnung für einen Lichtempfänger symmetrisch zu der Montageöffnung 38b am Trägersteg 32a angeordnet werden.

## Patentansprüche

1. Modulares optisches Sensorsystem für fluide Medien, mit einem Anschlussmodul (10) und einem Messmodul (12), das eine austauschbare Fluidkammer (14) und einen austauschbaren Optikhalter (16) aufweist, wobei:
- die Fluidkammer (14) einen Eingang (40), einen Ausgang (42) und einen Messraum für das fluide Medium aufweist;
- der Optikhalter (16) mindestens einen optischen Sender und mindestens einen optischen Empfänger aufweist;
- der Optikhalter (16) innerhalb des Messmoduls (12) relativ zu der Fluidkammer (14) in solcher Weise in Stellung einsetzbar ist, dass die von dem optischen Sender ausgehende Strahlung den Messraum für das fluide Medium in der Fluidkammer quert und auf den optischen Empfänger gelangt,
**dadurch gekennzeichnet, dass**
- das Anschlussmodul (10) einen Fluideinlass (26) und einen Fluidauslass (28) aufweist, die in einer flachen Ausnehmung (30) münden, die in der dem Messmodul (12) gegenüberliegenden Oberfläche gebildet ist und die Schnittstelle für die Fluidkammer (14) bildet.

2. Sensorsystem nach Anspruch 1, bei dem das Messmodul (12) mit einem Elektronikmodul (18) und dem Anschlussmodul (10) zu einem würfelförmigen Sensorgerät zusammengesetzt ist.

3. Sensorsystem nach Anspruch 1 oder 2, bei dem der Optikhalter (16) Montageöffnungen (38; 38a, 38b) für optische Bauelemente aufweist.

4. Sensorsystem nach einem der Ansprüche 1 bis 3, bei dem der Optikhalter (16) optische Bauelemente trägt, die entlang wenigstens zweier verschiedener optischer Achsen (A,B,C) angeordnet sind.

5. Sensorsystem nach einem der Ansprüche 1 bis 4, bei dem der Optikhalter (16) zwei beabstandete parallele Arme (34, 36; 34a, 36a) aufweist, die je ein optisches Bauelement tragen und die Fluidkammer (14) umgreifen.

6. Sensorsystem nach Anspruch 5, bei dem der Optikhalter (16) an drei ineinander übergehenden Seiten, die alle zu Seiten der Fluidkammer (14) benachbart sind, je ein optisches Bauelement trägt.

7. Sensorsystem nach Anspruch 5, bei dem der Messraum der Fluidkammer (14) zwischen den parallelen beabstandeten Armen (34, 36; 34a, 36a) des Optikhalters (16) angeordnet ist.

8. Sensorsystem nach einem der Ansprüche 1 bis 7, bei dem ein optisches Bauelement im Anschlussmodul (10) angeordnet ist.

9. Sensorsystem nach einem der Ansprüche 1 bis 8, bei dem die Fluidkammer (14) zusammengesetzt ist aus einem Anschlussflansch (14a) und einem Gehäuseteil (14b) mit einer offenen Seite, die durch den Anschlussflansch (14a) geschlossen wird.

10. Sensorsystem nach Anspruch 9, bei dem der Anschlussflansch (14a) Verdrängerkörper (43) aufweist, die in das Volumen der Fluidkammer (14) ragen.

11. Sensorsystem nach Anspruch 9 oder 10, bei dem der Anschlussflansch (14a) dichtend und formschlüssig in die Ausnehmung (30 des Anschlussmoduls (10) einsetzbar ist.

12. Sensorsystem nach Anspruch 5, bei dem der Optikhalter (16) an drei ineinander übergehenden Seiten, die alle zu Seiten der Fluidkammer (14) benachbart sind, und zusätzlich an einer schräg zur Fluidkammer (14) geneigten Fläche wenigstens je ein optisches Bauelement trägt.

13. Optisches Messmodul zur Verwendung in einem modularen Sensorsystem nach einem der vorhergehenden Ansprüche, das aus aufeinandergestapelten Modulen (10, 12, 18) besteht, mit einem platten- oder quaderförmigen Trägerkörper (50), der eine Ausnehmung (52) zur passenden Aufnahme eines austauschbaren Einsatzes (54) und Montageöffnungen (56, 58) zur Aufnahme von optischen Bauelementen aufweist, wobei der Einsatz eine Fluidkammer bildet, die einen Fluideingang, einen Fluidausgang und einen Messraum aufweist, den eine zwischen den optischen Bauelementen gebildete optische Achse quert.

## Claims

1. A modular optical sensor system for fluid media, comprising a connection module (10) and a measuring module (12) which includes an exchangeable fluid chamber (14) and an exchangeable optics holder (16), wherein:
- the fluid chamber (14) includes an inlet (40), an outlet (42) and a measurement space for the fluid medium;
- the optics holder (16) includes at least one optical transmitter and at least one optical receiver;
- the optics holder (16) can be inserted within the measuring module (12) relative to the fluid chamber (14) in position in such a way that the radiation emitted by the optical transmitter traverses the measurement space for the fluid medium in the fluid chamber and impinges on the optical receiver,
**characterized in that**
- the connection module (10) includes a fluid inlet (26) and a fluid outlet (28) which open in a shallow recess (30) which is formed in the surface opposite the measuring module (12) and forms the interface for the fluid chamber (14).

2. The sensor system according to claim 1, in which the measuring module (12) is assembled to form a cube-shaped sensor device with an electronics module (18) and the connection module (10).

3. The sensor system according to claim 1 or 2, in which the optics holder (16) includes assembly openings (38; 38a, 38b) for optical components.

4. The sensor system according to any of claims 1 to 3, in which the optics holder (16) carries optical components which are arranged along at least two different optical axes (A, B, C).

5. The sensor system according to any of claims 1 to 4, in which the optics holder (16) includes two spaced parallel arms (34, 36; 34a, 36a) which carry one optical component each and engage around the fluid chamber (14).

6. The sensor system according to claim 5, in which the optics holder (16) carries one optical component each on three sides transitioning into one another, which all are adjacent to sides of the fluid chamber (14).

7. The sensor system according to claim 5, in which the measurement space of the fluid chamber (14) is arranged between the parallel spaced arms (34, 36; 34a, 36a) of the optics holder (16).

8. The sensor system according to any of claims 1 to 7, in which an optical component is arranged in the connection module (10).

9. The sensor system according to any of claims 1 to 8, in which the fluid chamber (14) is composed of a connecting flange (14a) and a housing part (14b) with an open side which is closed by the connecting flange (14a).

10. The sensor system according to claim 9, in which the connecting flange (14a) includes displacers (43) which protrude into the volume of the fluid chamber (14).

11. The sensor system according to claim 9 or 10, in which the connecting flange (14a) can be inserted into the recess (30) of the connection module (10) in a sealing and form-locking manner.

12. The sensor system according to claim 5, in which the optics holder (16) carries at least one optical component each on three sides transitioning into one another, which all are adjacent to sides of the fluid chamber (14), and in addition on a surface inclined at an angle to the fluid chamber (14).

13. An optical measuring module for use in a modular sensor system according to any of the preceding claims, which consists of stacked modules (10, 12, 18), comprising a plate-shaped or cuboid carrier body (50) which includes a recess (52) for fittingly receiving an exchangeable insert (54) and assembly openings (56, 58) for receiving optical components, wherein the insert forms a fluid chamber which includes a fluid inlet, a fluid outlet and a measurement space which is traversed by an optical axis formed between the optical components.

## Revendications

1. Système capteur optique modulaire pour des milieux fluides, comportant un module de raccordement (10) et un module de mesure (12) qui présente une chambre de fluide (14) échangeable et un support d'optique (16) échangeable,
- la chambre de fluide (14) présentant une entrée (40), une sortie (42) et un espace de mesure pour le milieu fluide,
- le support d'optique (16) présentant au moins un émetteur optique et au moins un récepteur optique ;
- le support d'optique (16) étant apte à être inséré dans une position à l'intérieur du module de mesure (12) par rapport à la chambre de fluide (14) de telle sorte que le rayonnement émis par l'émetteur optique traverse l'espace de mesure pour le milieu fluide dans la chambre de fluide et parvient sur le récepteur optique,
**caractérisé en ce que**
- le module de raccordement (10) présente une entrée de fluide (26) et une sortie de fluide (28) qui débouchent dans un évidement peu profond (30) qui est ménagé dans la surface opposée au module de mesure (12) et qui forme l'interface pour la chambre de fluide (14).

2. Système capteur selon la revendication 1, dans lequel le module de mesure (12) est assemblé avec un module électronique (18) et le module de raccordement (10) de manière à former un appareil capteur cubique.

3. Système capteur selon la revendication 1 ou 2, dans lequel le support d'optique (16) présente des orifices de montage (38; 38a, 38b) pour des composants optiques.

4. Système capteur selon l'une des revendications 1 à 3, dans lequel le support d'optique (16) porte des composants optiques qui sont agencés le long d'au moins deux axes optiques (A, B, C) différents.

5. Système capteur selon l'une des revendications 1 à 4, dans lequel le support d'optique (16) présente deux bras parallèles espacés (34, 36 ; 34a, 36a) qui portent chacun un composant optique et s'engagent autour de la chambre de fluide (14).

6. Système capteur selon la revendication 5, dans lequel le support d'optique (16) porte un composant optique respectif sur trois côtés qui se fondent les uns dans les autres et qui sont tous adjacents à des côtés de la chambre de fluide (14).

7. Système capteur selon la revendication 5, dans lequel l'espace de mesure de la chambre de fluide (14) est agencé entre les bras parallèles espacés (34, 36 ; 34a, 36a) du support d'optique (16).

8. Système capteur selon l'une des revendications 1 à 7, dans lequel un composant optique est agencé dans le module de raccordement (10).

9. Système capteur selon l'une des revendications 1 à 8, dans lequel la chambre de fluide (14) est composée d'une bride de raccordement (14a) et d'une pièce de boîtier (14b) présentant un côté ouvert qui est fermé par la bride de raccordement (14a).

10. Système capteur selon la revendication 9, dans lequel la bride de raccordement (14a) présente des corps déplaceurs (43) qui font saillie dans le volume de la chambre de fluide (14).

11. Système capteur selon la revendication 9 ou 10, dans lequel la bride de raccordement (14a) est apte à être insérée de manière étanche et par coopération de formes dans l'évidement (30) du module de raccordement (10).

12. Système capteur selon la revendication 5, dans lequel le support d'optique (16) porte un composant optique respectif sur trois côtés qui se fondent les uns dans les autres et qui sont tous adjacents à des côtés de la chambre de fluide (14), et en outre sur une surface inclinée en biais par rapport à la chambre de fluide (14).

13. Module de mesure optique pour l'utilisation dans un système capteur modulaire selon l'une des revendications précédentes, lequel est composé de modules (10, 12, 18) empilés les uns sur les autres, comportant un corps support (50) en forme de plaque ou de parallélépipède qui présente un évidement (52) pour le logement ajusté d'un insert échangeable (54) et des orifices de montage (56, 58) pour le logement de composants optiques, l'insert formant une chambre de fluide qui présente une entrée de fluide, une sortie de fluide et un espace de mesure à travers lequel passe un axe optique formé entre les composants optiques.
